# EUROPEAN PATENT SPECIFICATION

(11) **EP 2 091 359 B1**
(45) Date of publication and mention of the grant of the patent: **28.09.2011**
(21) Application number: 07822712.1
(22) Date of filing: 19.11.2007
(51) Int. Cl.: A23L 1/40, A23L 1/223

(54) **BOUILLON OR SEASONING CONCENTRATE AND PROCESS FOR PREPARING THE SAME**
BOUILLON- ODER WÜRZKONZENTRAT UND VERFAHREN ZU DESSEN HERSTELLUNG
CONCENTRÉ POUR BOUILLON OU ASSAISONNEMENT ET PROCÉDÉ DE PRÉPARATION DE CELUI-CI

(30) Priority: 08.12.2006 EP 06125667
(43) Date of publication of application: 26.08.2009
(73) Proprietor: Unilever N.V., 3013 AL Rotterdam (NL); Unilever PLC, London EC4Y 0DY (GB)
(72) Inventor: BAGGEN, Marc Hermann Marie, 74074 Heilbronn (DE); KELLERMAN, Richard Friedrich, 74074 Heilbronn (DE)
(74) Representative: Wurfbain, Gilles L.
(86) International application number: PCT/EP2007/062517
(87) International publication number: WO 2008/068138

(56) References cited:
- EP-A1- 0 981 970
- EP-A2- 0 289 069
- WO-A-2004/017762
- WO-A-2006/024464
- WO-A-2006/063690
- GB-A- 1 313 830
- GB-A- 2 252 710
- US-A- 4 156 020
- US-A- 6 090 419
- US-A- 6 126 979

## Description

### Field of the Invention

The present invention relates to a solid food concentrate, e.g. a bouillon or seasoning concentrate, comprising one or more of salt, monosodium glutamate, sugar, starch and fat. The invention additionally relates to a process of preparing the latter solid food concentrate.

### Background of the invention

A bouillon cube is a product widely used as a concentrate to prepare a bouillon, a broth or a soup. The bouillon concentrate is normally added to a hot aqueous solution, allowing it to dissolve. In addition, a bouillon cube may be used when preparing other dishes, as a seasoning product. Such seasoning cubes are preferably added to a dish or food by crumbling.

A typical bouillon cube comprises salts, taste enhancing compounds like monosodium glutamate (MSG), sugars, starch (like flour), fat, flavouring components like vegetables, meat extracts, spices and so on, and e.g. colourants. The amounts of the respective compounds may vary depending on the specific purpose of the product, the market or taste of the consumer that is aimed at.

In general two embodiments of bouillon cubes can be distinguished. First the form in which the bouillon cube is pressed from powder, resulting in a relatively hard and dense cube. A specific form of pressing is roller compacting. In this technique the powder is pressed and compacted between two counter-rotating rolls. In the context of this invention, with pressed cubes, also roller compacted cubes are meant. The second embodiment of bouillon cubes is softer, and is prepared by extruding a pasty mass.

In order to shape the bouillon concentrate into a relatively quick dissolving stable cube by compression or extrusion, a binding compound is highly advantageous, if not essential. In most cases, a certain amount of fat is used for this purpose. Shaping towards the pasty cube, using extrusion, in general comprises a higher fat content than agglomeration using compression. Hence, extruded cubes in general have a higher fat content than pressed cubes.

A problem experienced by the consumer when using bouillon cubes containing fat, is that after dissolution of the bouillon cube, a fat layer is formed on the resulting bouillon. In particular when using extruded bouillon cubes, this problem may be present. This can be considered by the consumer as non-healthy, or at least unappealing. A small amount of fat, however, is still preferred, for reasons of taste.

The problem to produce a low fat bouillon cube is issued by a method as described in US 6126979. The method comprises providing a bouillon powder having substantially no water added. The powder is pressed on a die, which is moisturized with a residual of water on its surface. Such a process is difficult to control and, besides this, may not work for extruded cubes.

WO 2004/017762 discloses savoury particles, preferably comprising 1-30% oil or fat. WO2006/024464 discloses a shelf-stable cooking and with 0.2-15% fat.

Therefore, the aim of the present invention is to provide a bouillon cube with a reduced fat content (preferably an extruded cube), which looks like an ordinary bouillon cube, but has still good processing features, and preferably can be prepared using conventional pressing or extrusion, and preferably is dissolving in similar time as conventional bouillon cubes.

### Summary of the invention

This aim has, at least partly, been met by a solid food concentrate comprising 5-45 wt.% MSG, fat and liquid polyol, and further comprising at least one of the following ingredients: 20-70 wt.% salt, 5-20 wt.% sugar, 2-15 wt.% starch, 2-20 wt.% spices, 2-30 wt.% herbs, wherein the total amount of fat and liquid polyol is 4-30% with a maximum polyol content of 10 wt.% of the total concentrate, and a particle diameter greater than 1.2 cm and wherein the solid food concentrate is in the form of a cube or a tablet

### Detailed description of the invention

In the present invention, 'solid' is intended to mean that the material is not liquid. However, also material is considered solid that is pasty, and/or can be kneaded or crumbled e.g. by hand. Solid is also intended to mean that the material has a homogenous constitution, and that essentially no voids (e.g. filled with matter of a different constitution) are present in the material. A homogenous constitution is intended to mean that the concentrate has a uniform composition and structure throughout its body.

Although the current invention mentions "cubes", or "tablets" this does not mean the unit dosage should have a traditional cube or tablet shape (i.e. a block with the size in all three dimensions the same or a block that is longer than it is wide: it can also be in the shape of a bar, block, brick, cylinder, pyramid, tetraeder, cone, ball or other 3-dimensional (regular or irregular) shape. Depending upon size, concentration and aim, one unit of such a cube (whatever shape) is usually sufficient for preparing between 100 and 1000 ml bouillon, broth, soup, or sauce (or even up to 3 or 5 liter for catering purposes), or can be used for seasoning 100-1000 g food matter. For the purpose of this invention, all such shapes are herein referred to as "cubes" or "tablets".

It was found that the fat content of the product can be reduced by replacing fat by a liquid polyol. In the present description, "total amount of fat and liquid polyol" should be construed as the amount of fat and liquid polyol taken together. The liquid polyol is a non-toxic polyol, suitable for consumption. For example, propylene glycol, or liquid sorbitol, can be used as liquid polyols. It is preferred that at least part of the polyol is glycerol. More preferably, the polyol is glycerol. By doing so, it was found that bouillon cubes can be prepared using conventional shaping techniques, yet have a reduced fat content. An aim of the invention is to provide a low- fat food product. Therefore, the presence of a small amount of fat is still preferred for reasons of taste. Fat and polyol taken together are preferably not present in a bouillon cube in too high amounts. A maximum of 10 wt% (based on the total concentrate) of polyol was preferred in the present invention, e.g. to prevent staining of the packaging material or problematic cube formation.

In the present invention, 'fat' is intended to mean both fat and liquid oil. Preferred fats are triglycerides, such as vegetable fat, pork fat, chicken fat or beef fat.

The present invention may comprise (edible) salt, preferably comprising NaCl, but also other edible salts may be present.

As has been indicated above, the product according to the invention may comprise herbs and spices.

The aim of the invention is to provide a solid food concentrate, preferably a bouillon cube or tablet, with a size comparable to conventional bouillon cubes. Preferably, they are produced with conventional techniques and machines used to prepare pressed, roller compacted, or extruded bouillon cubes respectively. However, density, water activity, dissolution time and weight may vary in some degree from conventional cubes, depending on the formulation. According to the present invention, the solid concentrate has a diameter of at least 1.2 cm. As the solid concentrate may be present in several shapes, this minimum diameter should be intended here as that the length of at least one traverse section of the concentrate is greater than 1.2 cm, preferably, that the length of the smallest traverse is greater than 1.2 cm. Or alternatively, that the weight of the solid concentrate is at least as high as the weight of that concentrate in the form of a sphere with a diameter of 1.2 cm. Therefore a solid food concentrate, preferably a cube or tablet, is preferred with a weight of at least 2.5 g, preferably with a weight of at least 5 g.

It was observed that in solid concentrates according to the present invention a substantial amount of fat could be replaced by an amount of polyol that in general is smaller than the amount of replaced fat. According to the invention up to 50% of the original fat content may be replaced by the polyol. Good crumbability was observed.

In a preferred embodiment, the concentrate according to the invention comprises a total content of fat and liquid polyol together of 8-25 wt% of the total concentrate with a maximum liquid polyol content of 8 wt.%, preferably 2-8 wt.%, of the total concentrate.

According to the present invention, the concentrate is in the form of a cube or a tablet. Therefore the present invention also relates to solid concentrate that is in the form of a cube or a tablet, wherein the content of fat and liquid polyol taken together is 4-15 wit% of the total concentrate. Such a fat/polyol content is preferred for a pressed cube or tablet. Pressed cubes or tablets in general have a relatively low fat content (around 10%) compared to extruded cubes. Pressed cubes or tablets are made by pressing a portion of product in the form of a powder in a mould that is closed at all sides. Applying high pressure to the powder in the mould results in the cube or tablet form. Suitably, the machine used is from Bonals.

In another preferred embodiment, a substantial amount of fat has been replaced by the polyol. Therefore, the invention relates to a concentrate according to the invention, wherein the total amount of fat is 3 to 10 wt.% of the total concentrate. Preferably, this amount of fat is 5 to 8 wt.% of the total concentrate. These relatively low amounts of fat are especially suitable for concentrates prepared by using pressing or roller compaction.

The low fat content combined with the glycerol may enable production of a relatively hard concentrate, but with a lower fat content, compared to conventional pressed concentrates, by pressing a mixture of ingredients to a cube or tablet in a conventional pressing or roller compaction device.

According to another aspect of the invention, the concentrate is in the form of a cube or tablet wherein the content of fat and liquid polyol taken together is 15-30 wt% of the total concentrate. Such a fat/polyol content is preferred for solid concentrates in the form of an extruded cube. The content of fat and polyol taken together is usually higher than for pressed cubes or tablets. As extruded cubes or tablets in general comprise a higher fat content than pressed cubes (around 20%), the present invention is particularly relevant for extruded cubes or tablets.

As for concentrates with a more pasty texture, such as e.g. prepared by extrusion, a higher fat content may be preferred, the present invention further relates to a concentrate of the invention, wherein the fat content is in the range of from 8 to 20 %wt, preferably form 10 to 15% wt., more preferably from 11 to 13 %wt, as based on the total concentrate.

The content of liquid polyol in the extruded concentrate is still in the range of from at least 1 wt% and less than 10 wt%, preferably from at least 2 wt% and less than 8 %wt.

When soft/pasty-like concentrates are desired, the relatively higher amounts of fat, as compared with the amount used for pressed concentrates, combined with the glycerol, may enable production of soft concentrates with a relatively low fat content, compared to conventional cubes, but still with a texture that is pasty enough to enable preparation in a conventional extrusion device.

Extruded cubes or tablets may have around 2% water added additionally to the recipe, in contrast to pressed cubes or tablets.

Extruded cubes or tablets are prepared by pressing a portion of product in the form of a paste in a mould. The mould is open at one side. Pressure is only applied to press the product against the mould and shape the cube. Pressure is not applied to actually connect the product, as this is already a homogenous mass. Suitably, a apparatus from Corazzas or Benhills is used to prepare extruded cubes or tablets.

The concentrate can be used as a seasoning product to use in a dish during or after cooking. To this end, the concentrate can be added as a whole, or after crumbling it into the dish. Accordingly, the present invention relates to the use of a solid food concentrate according to the invention to season a dish.

However, the concentrate of the present invention can also be used to prepare a bouillon, e.g. after dissolving it in an aqueous liquid, for example boiling water. Such a bouillon may comprise e.g. 0.1-65% of the concentrate. The present invention therefore relates to a process for preparing a bouillon or broth, comprising the step of dissolving a solid food concentrate according to the invention in an aqueous liquid.

The invention further relates to a process for preparing the concentrates according to the invention. Such a process comprises the steps of:
- mixing the ingredients.
- transferring the mixture to a die.
- forming a shaped solid concentrate.

The solid concentrate can be pressed, resulting in a pressed cube or a tablet, or can be extruded, to result in a pasty, extruded cube. The present invention therefore further relates to a process for preparing the concentrates of the invention, wherein the forming comprises pressing or roller compacting to a cube or tablet, wherein the content of fat and liquid polyol taken together is 4-15 wt% of the total concentrate. Additionally, the invention further relates to a process according to the invention, wherein the forming comprises extruding to a cube or tablet, wherein the content of fat and liquid polyol taken together is 15-30 wt% of the total concentrate.

### Examples

Brazilian chicken bouillon with glycerol without water: 1 Brazilian chicken bouillon without glycerol (comparative): 2 All amounts are in wt.%.

| **Ingredient** | **1** | **2 (comp.)** |
|---|---|---|
| Salt | 49.4 | 54.7 |
| Monosodium glutamate | 11.9 | 10.3 |
| Vegetable hydrogenated fat | 12.0 | 19.7 |
| Glycerol | 5.4 | - |
| Water | - | 2.3 |
| Colourant liquid | 0.2 | 0.2 |
| Potato starch (dried) | 13.7 | 5.4 |
| Chicken powder meat | 0.5 | 0.5 |
| Yeast extract | 1.5 | 1.5 |
| Spices | 1.4 | 1.4 |
| Inosinate | 0.2 | 0.2 |
| Sugar | 2.4 | 2.4 |
| Chicken flavour | 1.2 | 1.2 |
| Parsley flakes | 0.2 | 0.2 |
| Total | 100.0 | 100.0 |

An extruded solid food concentrate according to the invention has been produced by using a conventional extrusion device. The example shows that 5.4 wt.% (example 1) of polyol can respectively replace 7.7 wt.% of fat. The concentrate according to example 1 resulted in a cube that closely resembles a bouillon cube according to the state of the art. The cube could be crumbled easily, and did not show fat staining on its packaging. Dissolving the concentrate in an aqueous liquid, resulted in a bouillon that resembled a freshly prepared chicken soup and did not show an excessive fat layer.

## Claims

1. Solid food concentrate comprising fat and liquid polyol, 5-45 wt.% monosodiumglutamate, and further comprising at least one of the following ingredients: 20-70 wt.% salt, 5-20 wt.% sugar, 2-15 wt.% starch, 2-20 wt.% spices, 2-30 wt.% herbs, wherein the total amount of fat and liquid polyol is 4-30% with a liquid polyol content of 1-10 wt.% of the total concentrate, and a particle diameter greater than 1.2 cm and wherein the solid food concentrate is in the form of a cube or a tablet.

2. Solid food concentrate according to claim 1, wherein the weight is at least 2.5 g.

3. Solid food concentrate according to claim 1 or 2, wherein the liquid polyol comprises glycerol.

4. Solid food concentrate according to anyone of the claims 1 to 3, wherein the total amount of fat and liquid polyol, is 8-25 wt% of the total concentrate with a liquid polyol content of 2-8 wt.% of the total concentrate.

5. Solid food concentrate according to anyone of the claims 1 to 4 wherein the concentrates is in the form of a pressed cube or tablet, wherein the content of fat and liquid polyol taken together is 4-15 wt% of the total concentrate.

6. Solid food concentrate according to anyone of the claims 1 to 5, wherein the total amount of fat is 3 to 10 wt.%, preferably 5 to 8 wt.% of the total concentrate.

7. Solid food concentrate according to anyone of the claims 1 to 4 wherein the concentrate is in the form of an extruded cube or tablet, wherein the content of fat and liquid polyol taken together is 15-30 wt% of the total concentrate.

8. Solid food concentrate according to claim 7, wherein the total amount of fat is 8 to 20 wt.%, preferably 10 to 15 wt%, more preferably 11-13 wt.% of the total concentrate.

9. Process for manufacturing a solid food concentrate according to anyone of the claims 1 to 8, the process comprising the steps of:
- mixing the ingredients.
- transferring the mixture to a die
- forming a shaped solid concentrate.

10. Process according to claim 9, wherein the forming comprises pressing or roller compacting to a cube or tablet, wherein the content of fat and liquid polyol taken together is 4-15 wt% of the total concentrate.

11. Process according to claim 9, wherein the forming comprises extruding to a cube or tablet, wherein the content of fat and liquid polyol taken together is 15-30 wt% of the total concentrate.

## Patentansprüche

1. Festes Nahrungsmittelkonzentrat, das Fett und flüssiges Polyol, 5-45 Gewichts-% Mononatriumglutamat umfasst und außerdem wenigstens einen der folgenden Bestandteile umfasst: 20-70 Gewichts-% Salz, 5-20 Gewichts-% Zucker, 2-15 Gewichts-% Stärke, 2-20 Gewichts-% Gewürze, 2-30 Gewichts-% Kräuter, wobei die Gesamtmenge an Fett und flüssigem Polyol 4-30 % ist, wobei der Gehalt an flüssigem Polyol 1-10 Gewichts-% des gesamten Konzentrats ist und der Partikeldurchmesser größer als 1,2 cm ist, und wobei das festes Nahrungsmittelkonzentrat in der Form eines Würfels oder einer Tablette ist.

2. Festes Nahrungsmittelkonzentrat gemäß Anspruch 1, wobei das Gewicht wenigstens 2,5 g ist.

3. Festes Nahrungsmittelkonzentrat gemäß Anspruch 1 oder 2, wobei das flüssige Polyol Glycerin umfasst.

4. Festes Nahrungsmittelkonzentrat gemäß einem der Ansprüche 1 bis 3, wobei die Gesamtmenge an Fett und flüssigem Polyol 8-25 Gewichts-% des gesamten Konzentrats ist, wobei der Gehalt an flüssigem Polyol 2-8 Gewichts-% des gesamten Konzentrats ist.

5. Festes Nahrungsmittelkonzentrat gemäß einem der Ansprüche 1 bis 4, wobei das Konzentrat in der Form eines gepressten Würfels oder einer gepressten Tablette ist, wobei der Gehalt an Fett und flüssigem Polyol zusammen genommen 4-15 Gewichts-% des gesamten Konzentrats ist.

6. Festes Nahrungsmittelkonzentrat gemäß einem der Ansprüche 1 bis 5, wobei die Gesamtmenge an Fett 3 bis 10 Gewichts-%, vorzugsweise 5 bis 8 Gewichts-% des gesamten Konzentrats ist.

7. Festes Nahrungsmittelkonzentrat gemäß einem der Ansprüche 1 bis 4, wobei das Konzentrat in der Form eines extrudierten Würfels oder einer extrudierten Tablette ist, wobei der Gehalt an Fett und flüssigem Polyol zusammen genommen 15-30 Gewichts-% des gesamten Konzentrats ist.

8. Festes Nahrungsmittelkonzentrat gemäß Anspruch 7, wobei die Gesamtmenge an Fett 8 bis 20 Gewichts-%, vorzugsweise 10 bis 15 Gewichts-%, bevorzugter 11-13 Gewichts-% des gesamten Konzentrats ist.

9. Verfahren zur Herstellung eines festen Nahrungsmittelkonzentrats gemäß einem der Ansprüche 1 bis 8, wobei das Verfahren die Schritte umfasst:
- Mischen der Bestandteile,
- Transferieren des Gemisches in eine Form,
- Bilden eines geformten festen Konzentrats.

10. Verfahren gemäß Anspruch 9, wobei das Formen Pressen oder Walzenkompaktieren zu einem Würfel oder einer Tablette umfasst, wobei der Gehalt an Fett und flüssigem Polyol zusammen genommen 4-15 Gewichts-% des gesamten Konzentrats ist.

11. Verfahren gemäß Anspruch 9, wobei das Formen Extrudieren zu einem Würfel oder einer Tablette umfasst, wobei der Gehalt an Fett und flüssigem Polyol zusammen genommen 15-30 Gewichts-% des gesamten Konzentrats ist.

## Revendications

1. Concentré alimentaire solide comprenant une matière grasse et un polyol liquide, 5 à 45 % en poids de glutamate monosodique, et comprenant, en outre, au moins un des ingrédients suivants : 20 à 70 % en poids de sel, 5 à 20 % en poids de sucre, 2 à 15 % en poids d'amidon, 2 à 20 % en poids d'épices, 2 à 30 % en poids d'herbes aromatiques, dans lequel la quantité totale de matière grasse et de polyol liquide est de 4 à 30 % avec une teneur en polyol liquide de 1 à 10 % en poids du concentré total, et un diamètre de particules supérieur à 1,2 cm, et dans lequel le concentré alimentaire solide est sous la forme d'un cube ou d'une tablette.

2. Concentré alimentaire solide selon la revendication 1, dans lequel le poids est d'au moins 2,5 g.

3. Concentré alimentaire solide selon la revendication 1 ou 2, dans lequel le polyol liquide comprend le glycérol.

4. Concentré alimentaire solide selon l'une quelconque des revendications 1 à 3, dans lequel la quantité totale de matière grasse et de polyol liquide est de 8 à 25 % en poids du concentré total, la teneur en polyol liquide représentant de 2 à 8 % en poids du concentré total.

5. Concentré alimentaire solide selon l'une quelconque des revendications 1 à 4, dans lequel le concentré est sous la forme d'un cube ou d'une tablette obtenu par pressage, la teneur de matière grasse et de polyol liquide pris ensemble étant de 4 à 15 % en poids du concentré total.

6. Concentré alimentaire solide selon l'une quelconque des revendications 1 à 5, dans lequel la quantité totale de matière grasse est de 3 à 10 % en poids, de préférence, de 5 à 8 % en poids du concentré total.

7. Concentré alimentaire solide selon l'une quelconque des revendications 1 à 4, dans lequel le concentré est sous la forme d'un cube ou d'une tablette obtenu par extrusion, la teneur de matière grasse et de polyol liquide pris ensemble étant de 15 à 30 % en poids du concentré total.

8. Concentré alimentaire solide selon la revendication 7, dans lequel la quantité totale de matière grasse est de 8 à 20 % en poids, de préférence, de 10 à 15 % en poids, plus préférablement, de 11 à 13 % en poids du concentré total.

9. Procédé de préparation d'un concentré alimentaire solide selon l'une quelconque des revendications 1 à 8, le procédé comprenant les étapes de :
- mélange des ingrédients,
- transfert du mélange dans une filière, et
- formation d'un concentré solide mis en forme.

10. Procédé selon la revendication 9, dans lequel l'étape de formation comprend le pressage ou le compactage au rouleau pour obtenir un cube ou une tablette, la teneur de matière grasse et de polyol liquide pris ensemble étant de 4 à 15 % en poids du concentré total.

11. Procédé selon la revendication 9, dans lequel l'étape de formation comprend l'extrusion pour obtenir un cube ou une tablette, la teneur de matière grasse et de polyol liquide pris ensemble étant de 15 à 30 % en poids du concentré total.
